# EUROPÄISCHE PATENTSCHRIFT

(11) **EP 4 100 133 B1**
(45) Veröffentlichungstag und Bekanntmachung des Hinweises auf die Patenterteilung: **15.07.2026**
(21) Anmeldenummer: 21704208.4
(22) Anmeldetag: 03.02.2021
(51) Int. Cl.: A63B 5/11, F16B 7/04

(54) **TRAMPOLIN**
TRAMPOLINE
TRAMPOLINE

(30) Priorität: 04.02.2020 DE 102020102803
(43) Veröffentlichungstag der Anmeldung: 14.12.2022
(73) Patentinhaber: bellicon AG, 6005 Luzern (CH)
(72) Erfinder: KOPF, Günter, 77971 Kippenheim (DE)
(74) Vertreter: Rätsch, Caroline
(86) Internationale Anmeldenummer: PCT/EP2021/052544
(87) Internationale Veröffentlichungsnummer: WO 2021/156306

(56) Entgegenhaltungen:
- CN-A- 109 364 423
- US-A1- 2004 071 496
- US-A1- 2004 176 214

## Beschreibung

Die Erfindung betrifft ein Trampolin, mit einem Rahmen, der eine Mehrzahl von rohrartigen Rahmensegmenten aufweist, und mit einer Mehrzahl von Verbindungsstücken, wobei jedes Verbindungsstück dazu ausgebildet ist, ein erstes Rahmensegment und ein zweites Rahmensegment miteinander zu verbinden.

Bei den Trampolinen handelt es sich insbesondere um so genannte Mini-Trampoline, die auch Fitness-Trampoline genannt werden. Derartige Trampoline haben einen maximalen Durchmesser von 2 bis 3 Metern und finden Einsatz in der Physiotherapie und im Fitnessbereich.

Bei den Mini- oder Fitness-Trampolinen unterscheidet man zwischen Trampolinen mit einer Federaufhängung und einer Gummiseilaufhängung. Bei der Federaufhängung ist an dem Rahmen ein Sprungtuch über Spiralfedern aus Metall befestigt. Bei der Gummiseilaufhängung kommen ein oder mehrere elastische Seilringe oder (offene) Seile zum Einsatz, die das Sprungtuch mit dem Rahmen verbinden. Die größere Elastizität einer derartigen Gummiseilaufhängung gegenüber den Metallfedern sorgt für ein "weicheres" Abbremsen des Körpers und schont insoweit nicht nur die Gelenke, sondern verlängert auch die muskulären Belastungs- und Entlastungsphasen beim Springen, was vorteilhafte Trainingseffekte mit sich bringt.

Die Erfindung ist sowohl auf Trampoline mit Federaufhängungen als auch auf Trampoline gerichtet, bei denen die Aufhängung als elastisches Seil oder elastischer Seilring ausgebildet ist. Grundsätzlich kann die Erfindung bei jeglicher Art von Trampolinen Einsatz finden, unabhängig von der Art der Aufhängung des Sprungtuchs und der Geometrie des Rahmens.

Den bekannten Trampolinen ist gemein, dass sie über einen umlaufenden Rahmen verfügen, von dem Beine abgehen. Die Sprungmatte ist innerhalb des Rahmens aufgespannt. Die Beine sorgen dafür, dass sich der Rahmen in einem bestimmten Abstand zum Boden befindet, wenn das Trampolin aufgestellt ist. Hierdurch wird gewährleistet, dass sich die Sprungmatte beim Springen in Richtung auf den Boden bewegen kann.

Aus der WO 2012 167 313 A1 ist ein Trampolin bekannt, dessen Rahmen aus einer Mehrzahl von Rahmensegmenten gebildet wird. Die Rahmensegmente bieten den Vorteil, dass das Trampolin platzsparend transportiert werden kann, um vor Ort aufgebaut zu werden. Das bekannte Trampolin weist eine Mehrzahl von Verbindungsstücken auf. Die Rahmensegmente werden zum Aufbau des Trampolins in die Verbindungsstücke gesteckt.

Ein ähnliches Trampolin ist aus der CN 109364423 A bekannt. Auch hier werden die Rahmensegmente in die Verbindungsstücke gesteckt.

Aus der US 2004/0176214 A1 ist ein Trampolin bekannt, dessen Rahmen aus einer Mehrzahl von ineinander steckbaren Rahmensegmenten besteht.

Die US 2004/0071496 A1 offenbart ebenfalls einen Trampolinrahmen, der aus mehreren ineinander steckbaren Rahmensegmenten besteht. Die zugewandten Enden zweier benachbarter Rahmensegmente weisen jeweils zwei geprägte Aussparungen bzw. Vorsprünge auf, die im zusammengesetzten Zustand ineinandergreifen. Hierdurch wird eine drehfeste Verbindung geschaffen.

Aus der Praxis sind sowohl runde als auch polygonale Rahmenformen bekannt. Die Erfindung ist insbesondere auf runde Trampoline gerichtet.

Der Erfindung liegt die **Aufgabe** zugrunde, ein aus mehreren Rahmensegmenten aufgebautes Trampolin zur Verfügung zu stellen, das einerseits leicht zusammengebaut werden kann und das andererseits im aufgebauten Zustand auch einer intensiven Benutzung stand hält.

Die Aufgabe wird gelöst durch ein Trampolin mit den Merkmalen des Patentanspruchs 1.

Das erfindungsgemäße Trampolin weist einen Rahmen auf, der sich aus einer Mehrzahl von rohrartigen Rahmensegmenten zusammensetzt. Erfindungsgemäß sind eine Mehrzahl von Verbindungsstücken vorgesehen, die zur Verbindung von jeweils zwei Rahmensegmenten geeignet und bestimmt sind. Das jeweilige Verbindungsstück ist dazu ausgebildet, ein erstes Rahmensegment und ein zweites Rahmensegment miteinander zu verbinden. Mit Hilfe der Verbindungsstücke können also die Rahmensegmente zu einem umlaufenden Rahmen zusammengebaut werden. Hierzu ist das jeweilige Verbindungsstück mindestens in das erste Rahmensegment eingesteckt oder einsteckbar. Jedes Verbindungsstück weist mindestens einen ersten Verbindungsabschnitt mit einem teilkreisförmigen Querschnitt auf. Der teilkreisförmige Querschnitt bildet eine teilkreisförmige Querschnittsfläche mit einer ersten Aussparung. Das erste Rahmensegment weist einen ersten Aufnahmeabschnitt zur Aufnahme des ersten Verbindungsabschnitts auf, wobei dessen Innenkontur sowohl an den teilkreisförmigen Querschnitt als auch an die Aussparung angepasst ist.

Das erfindungsgemäße Trampolin kann einerseits leicht zusammengebaut werden und hält andererseits im aufgebauten Zustand auch einer intensiven Benutzung stand. Insbesondere schafft die Aussparung eine Abweichung von der Kreisform des teilkreisförmigen Querschnitts. Die Aussparung bildet bevorzugt eine Ergänzung zur vollen Kreisform. Mit anderen Worten ergibt sich die volle Kreisform durch den teilkreisförmigen Querschnitt des Verbindungsstücks plus den Querschnitt der Aussparung. Durch die Anpassung der Innenkontur des aufnehmenden Rahmensegments weicht auch die Innenkontur teilweise von der Kreisform ab. Hierdurch ist die erfindungsgemäße Verbindung verwindungssteif. Dies ist insbesondere bei der Verwendung von herkömmlichen Haltestangen, an denen sich die Benutzer bei der Benutzung des Trampolins festhalten können und bei deren Benutzung hohe Hebelkräfte auftreten, vorteilhaft.

Erfindungsgemäß ist das Verbindungsstück aus Vollmaterial ausgebildet. Hierdurch kann es gut die während der Benutzung des Trampolins auftretenden Kräfte aufnehmen. Das Verbindungsstück besteht beispielsweise aus Metall, insbesondere Stahl oder Aluminium, oder aus Kunststoff.

Vorzugsweise weisen die Rahmensegmente einen runden Querschnitt auf. Im Bereich des teilkreisförmigen Querschnitts (bei eingestecktem Verbindungsstück) weist der Aufnahmeabschnitt eine runde Innenkontur auf. Der teilkreisförmige Querschnitt bildet eine Aussparung. In diesem Bereich ist die Kreisform des Querschnitts unterbrochen. Die Innenkontur des Aufnahmeabschnitts ist an die Außenkontur der Aussparung angepasst.

Das Verbindungsstück weist mindestens einen ersten Verbindungsabschnitt auf. Sofern lediglich ein Verbindungsabschnitt vorgesehen ist, ist das Verbindungsstück vorteilhafterweise bereits mit dem zweiten Rahmensegment verbunden, beispielsweise verklebt, verpresst, und/oder verschraubt. Bei Rahmen aus Metall wird man das Verbindungsstück aus Stabilitätsgründen vorzugsweise mit dem zweiten Rahmensegment verschweißen. Mit dem ersten Verbindungsabschnitt ist das Verbindungsstück in den ersten Aufnahmeabschnitt einsteckbar. Zusätzlich kann das Verbindungsstück mit Schrauben gesichert werden, wie es nachfolgend noch näher ausgeführt wird.

Die vorbeschriebene Ausführungsform berücksichtigt Verbindungsstücke mit einem einseitigen Verbindungsabschnitt. In Weiterbildung der Erfindung wird vorgeschlagen, dass das jeweilige Verbindungsstück zwei Verbindungsabschnitte aufweist. Dann kann es sich bei den Verbindungsstücken um lose Teile handeln, die mit ihrem einem Ende - dem ersten Verbindungsabschnitt - in einen ersten Aufnahmeabschnitt eines ersten Rahmensegments und mit ihrem anderen Ende - dem zweiten Verbindungsabschnitt - in einen zweiten Aufnahmeabschnitt eines zweiten Rahmensegments eingesteckt oder einsteckbar sind. Gleichermaßen möglich ist eine Vormontage dergestalt, dass die Verbindungsstücke mit ihrem zweiten Verbindungsabschnitt in dem zweiten Aufnahmeabschnitt des zweiten Rahmensegments festgelegt, beispielsweise verschraubt, sind. Hierzu können der erste und der zwei Verbindungsabschnitt unterschiedlich lang ausgebildet sein.

Vor diesem Hintergrund wird es als vorteilhaft angesehen, wenn das Verbindungsstück einen zweiten Verbindungsabschnitt mit einem teilkreisförmigen Querschnitt aufweist, wobei der teilkreisförmige Querschnitt eine zweite Aussparung bildet und wobei das zweite Rahmensegment einen zweiten Aufnahmeabschnitt zur Aufnahme des zweiten Verbindungsabschnitts aufweist, dessen Innenkontur sowohl an den teilkreisförmigen Querschnitt als auch an die Aussparung angepasst ist. Bei diesem Ausführungsbeispiel bilden also beide Verbindungsabschnitte jeweils eine Aussparung.

Eine vorteilhafte Ausführungsform der Erfindung ist dadurch gekennzeichnet, dass sich die erste Aussparung über die gesamte Länge des ersten Verbindungsabschnitts erstreckt. Dies schafft eine besonders verwindungssteife Konstruktion, die hohe Verwindungskräfte aufnehmen kann. Sofern vorgesehen, kann sich auch die zweite Aussparung über die gesamte Länge des zweiten Verbindungsabschnitts erstrecken. Als besonders vorteilhaft wird es angesehen, wenn die erste und die zweite Aussparung ineinander übergehen. Die erste und die zweite Aussparung können also eine durchgehende Aussparung bilden, die sich über den ersten Verbindungsabschnitt und den zweiten Verbindungsabschnitt erstreckt. Dies führt zu einer einfach herzustellenden Konstruktion.

In Weiterbildung der Erfindung ist vorgesehen, dass der erste Verbindungsabschnitt ein erstes freies Ende aufweist und dass sich die erste Aussparung bis zu dem ersten freien Ende erstreckt. Hierdurch kann der erste Verbindungsabschnitt besonders gut in den ersten Aufnahmeabschnitt gesteckt werden. Sofern vorgesehen, kann auch der zweite Verbindungsabschnitt ein zweites freies Ende aufweisen, wobei sich die zweite Aussparung bis zu dem zweiten freien Ende erstreckt.

Wie bereits vorstehend angedeutet, wird es als vorteilhaft angesehen, wenn der Querschnitt der Rahmensegmente rund, insbesondere kreisrund, ist. Der jeweilige Aufnahmeabschnitt kann hiervon ausgenommen sein. Er ist vorzugsweise lediglich teilweise rund ausgebildet. Ein runder Querschnitt der Rahmensegmente hat den Vorteil, dass elastische Seilringe gut auf ihm abgleiten können. Eine vorteilhafte Ausführungsform ist dadurch gekennzeichnet, dass der erste Aufnahmeabschnitt durch eine Verformung eines Endes des ersten Rahmensegments gebildet ist. Eine derartige Verformung ist durch ein Einspannen des jeweiligen Rahmensegments einfach herstellbar. Beispielsweise bildet die Verformung einen Vorsprung und die Aussparung bildet eine Nut. Dann kann der Vorsprung in die Nut eingreifen.

Vorteilhafterweise weist das Verbindungsstück einen radialen Steg auf, der die Einstecktiefe des Verbindungsstücks in das jeweilige Rahmensegment begrenzt. Der Steg erstreckt sich vorzugsweise in Umfangsrichtung des Verbindungsstücks. Vorzugsweise weist das Verbindungsstück eine Längsachse auf. Dann erstreckt sich die Umfangsrichtung um die Längsachse herum. Zweckmäßig begrenzt der Steg den jeweiligen Verbindungsabschnitt.

Gemäß einer vorteilhaften Ausführungsform ist der Steg in Umfangsrichtung des Verbindungsstücks zumindest teilweise umlaufend ausgebildet. Hierdurch kann er an die Rahmenform angepasst werden.

Als besonders vorteilhaft wird es angesehen, wenn der Steg einen Außendurchmesser aufweist, der größer ist als der teilkreisförmige Querschnitt des Verbindungsabschnitts. Hierdurch schafft der Steg eine wirksame Einsteckbegrenzung im Bereich des teilkreisförmigen Querschnitts. Zusätzlich oder alternativ ist es vorteilhaft, wenn der Außendurchmesser des Stegs mindestens dem Außendurchmesser eines angrenzenden Rahmensegments entspricht. Entspricht der Außendurchmesser des Stegs genau dem Außendurchmesser des Rahmensegments, entsteht der Eindruck einer durchgehenden Rahmenstärke. Er kann auch größer als das Rahmensegment gewählt werden.

Die Form des Stegs kann vielfältig sein. Als besonders vorteilhaft wird es angesehen, wenn der Steg mindestens eine seitliche Stoßfläche aufweist, die die Einstecktiefe des Verbindungsstücks in das erste Rahmensegment begrenzt. Sofern das Verbindungsstück zwei Verbindungsabschnitte aufweist, kann der Steg vorteilhaft auch zwei seitliche Stoßflächen aufweisen. Die Stoßflächen kommen beim Einstecken zweckmäßig zur Anlage an das jeweilige Rahmensegment.

Grundsätzlich kann es ausreichen, wenn die einzelnen Rahmensegmente lediglich zusammengesetzt werden. Die elastische Aufhängung der Sprungmatte - zum Beispiel durch elastische ringförmige oder offene Seilabschnitte - hält die einzelnen Rahmensegmente dann zusammen. Beim Springen auf dem Trampolin nehmen die Zugkräfte auf den Rahmen gegenüber der Ausgangslage noch zu, so dass der Rahmen auch bei einer Benutzung stabil bleibt. Allerdings kann es gleichermaßen vorteilhaft sein, die einzelnen Rahmensegmente zusätzlich zu sichern. In diesem Zusammenhang wird es als vorteilhaft vorgeschlagen, dass das Verbindungsstück mindestens ein Gewinde aufweist, das im zusammengesetzten Zustand des Rahmens mit einer im ersten Rahmensegment ausgebildeten Öffnung fluchtet. Durch die Öffnung in dem ersten Rahmensegment kann eine Schraube geschraubt werden, die in das Gewinde eingreift. Hierdurch kann der Rahmen zusätzlich gesichert und stabilisiert werden. Sofern ein zweiter Verbindungsabschnitt vorgesehen ist, kann das Verbindungsstück mindestens ein zweites Gewinde aufweisen, das im zusammengesetzten Zustand des Rahmens mit einer im zweiten Rahmensegment ausgebildeten Öffnung fluchtet.

Vorzugsweise ist mindestens ein Gewinde in der ersten Aussparung ausgebildet. Zusätzlich kann mindestens ein Gewinde in der zweiten Aussparung ausgebildet sein. Eine derartige Konstruktion ist platzsparend.

Eine vorteilhafte Ausführungsform der Erfindung ist dadurch gekennzeichnet, dass die Aussparung im eingesetzten Zustand des Verbindungsstücks bei einem aufgestellten Trampolin radial nach innen zeigt. Einerseits ist das mindestens eine Gewinde dann gut zugänglich. Andererseits sind eingesetzte Schrauben wenig sichtbar.

In Weiterbildung der Erfindung wird vorgeschlagen, dass das erste Rahmensegment eine Vertiefung bildet, die mit der ersten Aussparung zusammenwirkt. Vorzugsweise ist in der Vertiefung im zusammengesetzten Zustand des Trampolins mindestens ein Schraubenkopf aufgenommen. Der Schraubenkopf kann in der Vertiefung zumindest teilweise versenkt sein. Er stört also nicht etwaige Seilabschnitte oder Seilringe. Auch die Verletzungsgefahr ist reduziert.

Vorstehend wurde bereits angesprochen, dass es vorteilhaft ist, das jeweilige Rahmensegment im Endbereich umzuformen, um den Aufnahmeabschnitt zu bilden. Vorzugsweise handelt es sich bei der Umformung um eine Pressung. Eine derartige Umformung hat den Vorteil gegenüber einer ebenfalls möglichen spanabhebenden Bearbeitung, dass die Wandstärke des jeweiligen Rahmensegments im Bereich des Aufnahmeabschnitts nicht reduziert wird. Dies könnte zu einer Schwächung führen.

Bei der Ausbildung des Aufnahmeabschnitts sollte angestrebt werden, dass bei einem eingesteckten Verbindungsstück eine möglichst gute Passung erfolgt, der Aufnahmeabschnitt also möglichst gut an den Verbindungsabschnitt angepasst ist. In Versuchen hat es sich als besonders vorteilhaft ergeben, wenn das erste Rahmensegment und gegebenenfalls das zweite Rahmensegment rund und der jeweilige Aufnahmeabschnitt gerade ausgebildet sind. Hiermit ist gemeint, dass der aus den einzelnen Rahmensegmenten zusammengesetzte Rahmen grundsätzlich rund ausgebildet ist, dass aber die jeweiligen Aufnahmeabschnitte gerade ausgebildet sind und nicht die Krümmung des Rahmens aufweisen. Dies hat den erheblichen Vorteil, dass die Verbindungsstücke einerseits leicht eingesteckt werden können und andererseits eine gute Passung erzielt wird. Die gerade Ausbildung des Aufnahmeabschnitts kann dadurch erreicht werden, dass das jeweilige Rahmensegment mit seinem Endbereich auf eine Pressform gesteckt wird, die im Wesentlichen dem Verbindungsabschnitt des Verbindungsstücks entspricht, und dass anschließend das Rahmensegment auf die Pressform aufgepresst wird. Der jeweilige Aufnahmeabschnitt weist bevorzugt eine gerade Achse auf.

Gemäß der Erfindung ist mindestens die erste Aussparung als Nut ausgebildet. Dies gewährleistet eine besonders stabile Struktur. Auch die zweite Aussparung kann als Nut ausgebildet sein (sofern vorhanden). Gemäß der Erfindung kann ein nach innen ausgebildeter Vorsprung des Aufnahmeabschnitts in die Nut greifen.

Die Nut weist vorzugsweise geneigte Seitenwände auf.

Einerseits ist ein derartiges Verbindungsstück leicht in das jeweilige Rahmensegment einsteckbar, andererseits schafft eine derartige Konstruktion eine drehfeste Verbindung.

Vorzugsweise weist mindestens die erste Aussparung einen ebenen Boden auf. Hierdurch wird ein vorteilhafter Formenschluss erreicht. Außerdem kann in den ebenen Boden besonders gut ein Gewinde eingebracht werden.

Vorteilhafterweise bildet das jeweilige Rahmensegment im Bereich des jeweiligen Aufnahmeabschnitts außen eine Vertiefung. Diese Vertiefung erstreckt sich nach innen als Vorsprung. Der Boden ist vorzugsweise mindestens 5 mm breit. Die Vertiefung kann vorteilhaft den Kopf einer Schraube oder eines Sicherungsstifts aufnehmen.

Im Folgenden wird die Erfindung anhand eines bevorzugten Ausführungsbeispiels im Zusammenhang mit der anhängen Zeichnung näher im Detail erläutert. Die Zeichnung zeigt in:
- Figur 1: in einer schematischen Darstellung eine perspektivische Ansicht eines erfindungsgemäßen Trampolins;
- Figur 2: in einer schematischen Darstellung eine perspektivische Ansicht eines erfindungsgemäßen Verbindungsstücks;
- Figur 3: in einer schematischen Darstellung eine Draufsicht auf das Verbindungsstück nach Figur 2;
- Figur 4: in einer schematischen Darstellung eine Frontansicht des Verbindungsstücks nach Figur 2;
- Figur 5: in einer schematischen und abstrahierten Darstellung eine Frontansicht einer Variante zu dem Verbindungsstück nach den Figuren 2 bis 4;
- Figur 6: in einer schematischen und abstrahierten Darstellung eine Frontansicht einer weiteren Variante;
- Figur 7: in einer schematischen Darstellung eine perspektivische Ansicht eines Ausschnitts eines Rahmensegments;
- Figur 8: in einer schematischen Teil-Darstellung zwei Rahmensegmente in einem fast zusammengebauten Zustand, in dem ein Verbindungsstück lediglich teilweise in ein Rahmensegment eingesteckt ist; und
- Figur 9: in einer schematischen Teil-Darstellung zwei durch ein Verbindungsstück verbundene Rahmensegmente.

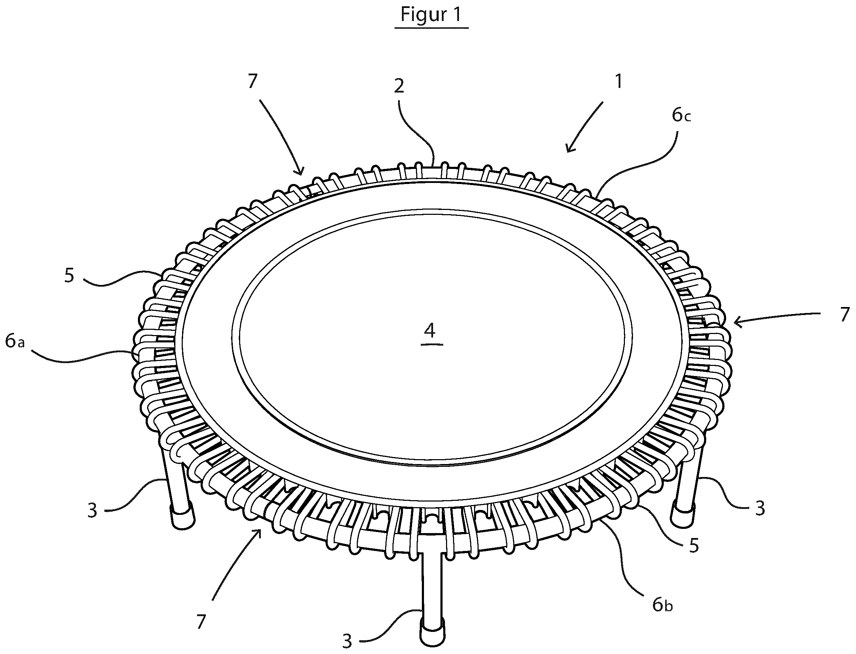

Figur 1 zeigt ein erfindungsgemäßes Trampolin 1 in einer perspektivischen Ansicht. Bei dem Trampolin 1 handelt es sich um ein rundes Trampolin, also um ein Trampolin mit einem runden Rahmen 2. Grundsätzlich ist die Erfindung auf jede Form von Trampolin gerichtet.

Das erfindungsgemäße Trampolin 1 weist einen Rahmen 2 und eine Mehrzahl von Beinen 3 auf. Die Beine 3 sind in regelmäßigen Abständen zueinander angeordnet. Mit dem Bezugszeichen 4 ist eine Sprungmatte gekennzeichnet, die über elastische Seilringe 5 auf bekannte Art und Weise mit dem Rahmen 2 verbunden sind. Die Art der Befestigung der Sprungmatte 4 an dem Rahmen 2 ist für die Erfindung irrelevant. Hier kommen auch andere Befestigungsarten in Betracht, zum Beispiel offene Seilabschnitte oder auch ein langes durchgehendes Seil.

Erfindungsgemäß besteht der Rahmen 2 aus mehreren Rahmensegmenten 6a, 6b, 6c. Dies hat den Vorteil, dass das Trampolin in Einzelteilen platzsparend und damit kostensparend transportiert werden kann. Vorliegend handelt es sich um drei Rahmensegmente. Es können jedoch auch nur zwei oder auch mehr Rahmensegmente vorgesehen sein.

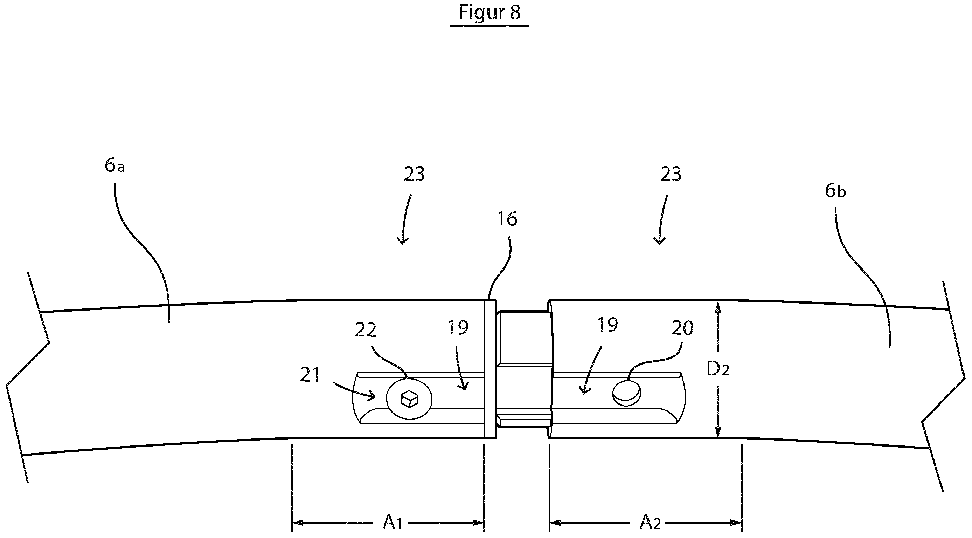

Die Rahmensegmente 6a, 6b, 6c sind an Verbindungsstellen 7 miteinander verbunden, wie dies im Zusammenhang mit Figur 8 noch näher erläutert wird. Die Verbindungsstellen 7 befinden sich vorteilhaft zwischen zwei Beinen 3.

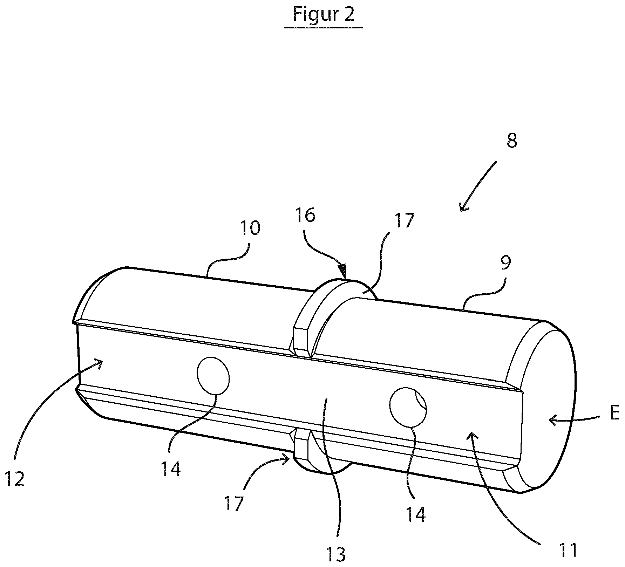

Im Folgenden wird Bezug auf die Figuren 2 bis 4 genommen, die ein erfindungsgemäßes Verbindungsstück 8 in verschiedenen Ansichten zeigen. Das Verbindungsstück 8 weist einen ersten Verbindungsabschnitt 9 und einen zweiten Verbindungsabschnitt 10 auf. Die Verbindungsabschnitte 9, 10 sind teilzylindrisch ausgebildet, wie es insbesondere aus Figur 2 ersichtlich ist. Der erste Aufnahmeabschnitt 9 bildet eine erste radiale Aussparung 11 und der zweite Aufnahmeabschnitt 10 bildet eine zweite radiale Aussparung 12. Bei dem vorliegenden Ausführungsbeispiel geht die erste Aussparung 11 in die zweite Aussparung 12 über und bilden hierdurch eine durchgehende Aussparung.

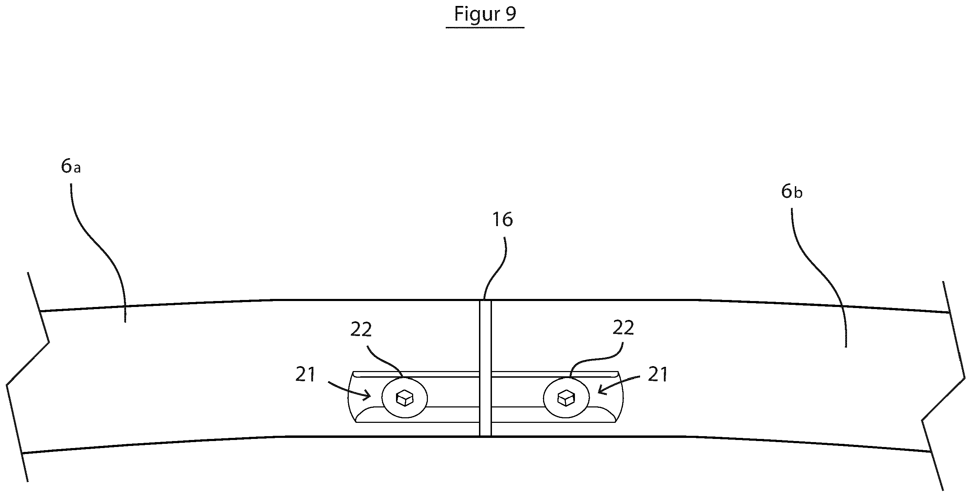

Die erste Aussparung 11 und die zweite Aussparung 12 bilden einen ebenen Boden 13. Der Boden 13 ist (wie die Aussparungen 11, 12) bei dem dargestellten Ausführungsbeispiel durchgängig ausgebildet. Der Boden 13 kann auch getrennt sein, wenn die Aussparungen 11, 12 getrennt sind. In dem Boden 13 sind zwei Gewinde 14 ausgebildet. Sie dienen zur Aufnahme von Schrauben, wie es im Zusammenhang mit den Figuren 8 und 9 noch näher erläutert wird.

Vorliegend sind die Aussparung 11 und die Aussparung 12 als Nut ausgebildet. Die Nut weist Seitenwände 15 auf, die vorzugsweise geneigt ausgebildet sind. Die Seitenwände 15 verlaufen also bevorzugt in einem Abschnitt nicht parallel, sondern laufen in Richtung auf den Boden aufeinander zu. Hierdurch ist das Verbindungsstück 8 einerseits besonders leicht in das jeweilige Rahmensegment einsteckbar, andererseits verbindet das Verbindungsstück zwei Rahmensegmente verwindungssteif, also drehsicher, miteinander. Auch eine gute Passung wird durch die geneigten Seitenwände 15 erleichtert.

Vorzugsweise weist das Verbindungsstück 8 einen radialen Steg 16 auf. Der Steg 16 trennt vorliegend den ersten Verbindungsabschnitt 9 und den zweiten Verbindungsabschnitt 10. Er ist umlaufend ausgebildet und bildet vorzugsweise eine Begrenzung der Einstecktiefe in das jeweilige Rahmensegment. Hierzu weist er seitliche Stoßflächen 17 auf. Im Bereich der Aussparungen 11, 12 ist der Steg 16 nicht umlaufend ausgebildet. Er kann aber auch vollständig umlaufend ausgebildet sein, wie es zum Beispiel in Figur 8 und 9 gezeigt ist. Vorzugsweise ist er zumindest teilweise umlaufend ausgebildet.

Der Steg 16 weist einen Durchmesser D1 auf. Der erste Verbindungsabschnitt 9 weist einen Durchmesser d1 auf. Der zweite Aufnahmeabschnitt 12 weist einen Durchmesser d2 auf. Vorzugsweise sind der Durchmesser d1 und d2 gleich groß. Dann können auch die Innendurchmesser der Aufnahmeabschnitte der Rahmensegmente gleich groß sein. Vorteilhafterweise ist der Durchmesser D1 größer ist als der Durchmesser d1 und/oder d2. Der Steg 16 geht also radial über den Verbindungsabschnitt 9 und/oder den Verbindungsabschnitt 10 hinaus. Sofern im Übrigen von einem Durchmesser gesprochen wird, ist damit der Durchmesser im kreisförmigen Querschnittsbereich gemeint, also dort, wo keine Aussparung vorgesehen ist.

Das Verbindungsstück 8 weist zwei freie Enden E auf. Vorzugsweise erstrecken sich die Aussparungen 11, 12 bis zu dem freien Ende hin.

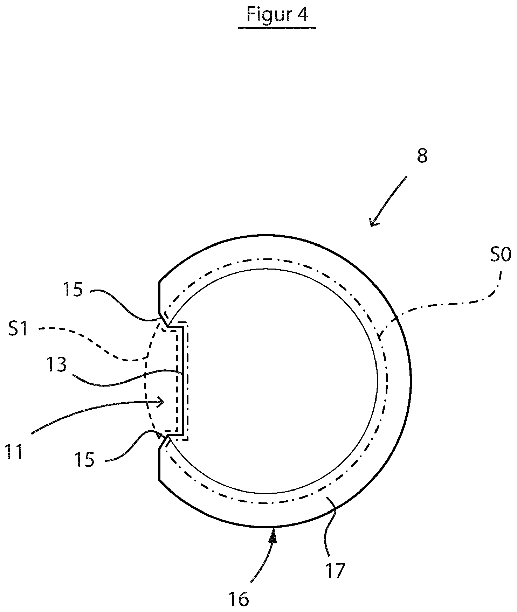

Im Rahmen der Erfindung bildet der teilkreisförmige Querschnitt eine teilkreisförmige Querschnittsfläche. Dieser Bereich ist mit dem Bezugszeichen S0 schematisch gekennzeichnet. Mit dem Begriff der "Aussparung" ist im Rahmen der Erfindung derjenige Bereich gemeint, der den Teilkreis zum Vollkreis bzw. die Teilkreisfläche zur Vollkreisfläche ergänzt. Dieser Bereich ist in Figur 4 mit einer Strichlinie S1 schematisch angedeutet. Bei dem Ausführungsbeispiel gemäß der Figuren 2 bis 4 ist die jeweilige Aussparung 11 als Nut ausgebildet.

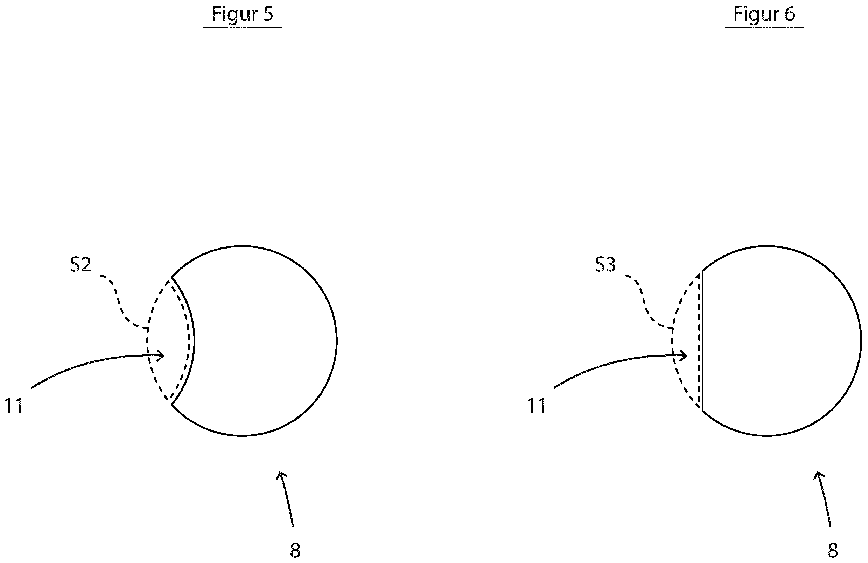

Die Figuren 5 und 6 sind analog der Figur 4, jedoch schematischer, alternative Ausführungsbeispiele von Aussparungen des Verbindungsstücks 8 dargestellt. Der Einfachheit halber werden in beiden Figuren die Verbindungsstücke mit dem gleichen Bezugszeichen 8 gekennzeichnet wie das erste Ausführungsbeispiel gemäß den Figuren 2 bis 4, auch wenn sie baulich leicht voneinander abweichen. Mit Bezugszeichen S0 ist wiederum die teilkreisförmige Querschnittsfläche gekennzeichnet. In Figur 5 wird die Aussparung 11 durch die Strichlinie S2 begrenzt. In Figur 6 wird die Aussparung 11 durch die Strichlinie S3 begrenzt. Aus Figur 6 wird deutlich, dass es sich bei der Aussparung 11 nicht um eine Vertiefung im Sinne einer Nut handeln muss. Wie in Figur 6 gezeigt, reicht es aus, wenn lediglich im Querschnitt ein Teilkreissegment (hier gekennzeichnet durch S3) ausgespart wird.

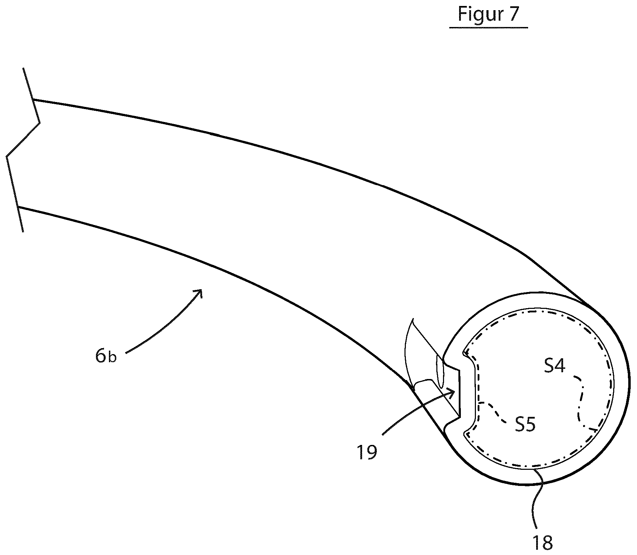

Figur 7 zeigt das Rahmensegment 6a als Ausschnitt. Das Rahmensegment 6b besteht (wie auch die anderen Rahmensegmente) aus einem Rohr und bildet eine Innenkontur 18, die an die Form des hier nicht dargestellten Verbindungsstücks 8 angepasst ist. Die Innenkontur weist einen ersten - teilkreisförmigen - Querschnittsbereich S4, der an den teilkreisförmigen Querschnitt des Verbindungsstücks 8 angepasst ist, sowie einen zweiten Querschnittsbereich S5 auf, der an die Aussparung 11 angepasst ist.

Vorzugsweise bildet das Rahmensegment 6b eine Vertiefung 19, die in die Aussparung 11 eingreift. Es versteht sich, dass, sofern zwei Verbindungsabschnitte 9, 10 vorgesehen sind, auch das benachbarte Rahmensegment eine Vertiefung 19 aufweist. Grundsätzlich wird es als vorteilhaft angesehen, wenn jedes Rahmensegment mindestens eine Vertiefung 19 aufweist. Jedes Rahmensegment kann auch zwei Vertiefungen 19 aufweisen, die dann an entgegengesetzten Enden des Rahmensegments angeordnet sind.

Es wird Bezug genommen auf die Figuren 8 und 9. Figur 8 zeigt einen Zwischenzustand beim Verbinden der Rahmensegmente 6a und 6b, wohingegen die Rahmensegmente in Figur 9 bereits zusammengefügt sind.

Die Rahmensegmente 6a, 6b weisen Öffnungen 20 auf, die im zusammengesetzten Zustand mit dem jeweiligen Gewinde 14 fluchten. Durch die Öffnungen 20 kann jeweils eine Schraube 21 in das Gewinde 14 geschraubt werden, um so die Rahmensegmente 6a, 6b zusätzlich zu sichern. Der Schraubenkopf 22 sitzt vorteilhaft in der Vertiefung 19.

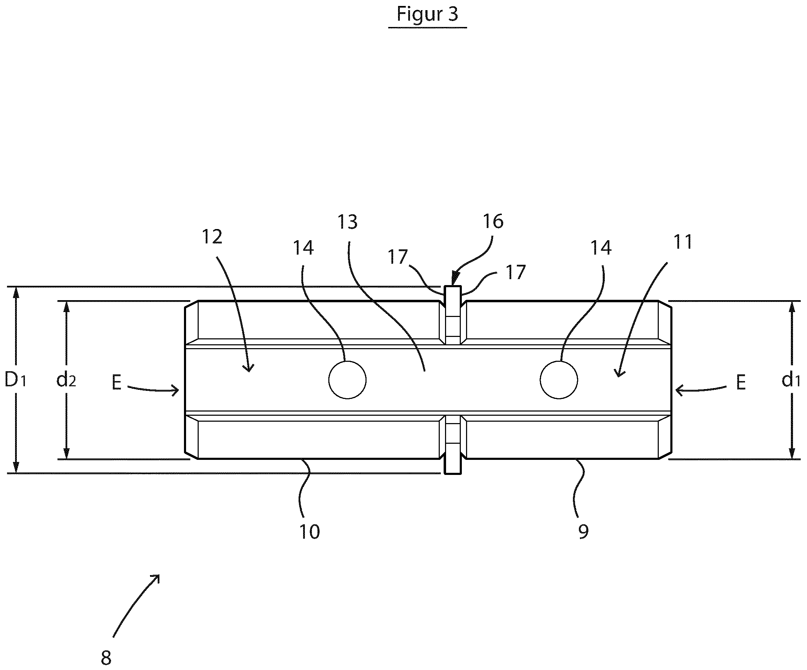

Die Rahmensegmente 6a, 6b weisen einen Außendurchmesser D2 auf. Der Außendurchmesser D1 des Stegs 16 (siehe Figur 3) ist vorzugsweise mindestens so groß wie der Außendurchmesser D2 der Rahmensegmente. Er kann auch gleich groß sein. Im Übrigen läuft der Steg 16 in den Figuren 8 und 9 im Gegensatz zu den Figuren 2 bis 4 vollumfänglich um.

Aus den Figuren 8 und 9 wird deutlich, dass die Rahmensegmente jeweils einen Aufnahmeabschnitt 23 aufweisen, der zur Aufnahme des Verbindungsstücks 8 dient. Vorzugsweise ist das jeweilige Rahmensegment 6a, 6b im Bereich des Aufnahmeabschnitts 23 gerade ausgebildet, wie dies durch die Abschnitte A1 und A2 gekennzeichnet ist. Die geraden Abschnitte A1, A2 haben den Vorteil, dass das Verbindungsstück 8 gut in die Rahmensegmente eingesteckt werden kann und gleichzeitig eine gute Passung gewährleistet ist.

Erfindungsgemäß ist vorgesehen, dass jedes Verbindungsstück mindestens einen ersten Verbindungsabschnitt aufweist. Diese Formulierung soll eine Konstruktion berücksichtigen, bei der das Verbindungsstück bereits an einem Rahmensegment fixiert ist, wie dies in Figur 8 dargestellt ist. Abweichend von Figur 8 kann das Verbindungsstück an dem Rahmen beispielsweise angeschweißt, verpresst oder verklebt sein.

Im Rahmen des Erfindungsgedankens sind durchaus Abweichungen und Modifikationen möglich. Das Verbindungsstück weist mindestens einen Verbindungsabschnitt auf. Es kann auch zwei Verbindungsabschnitte aufweisen. Sofern vorteilhafte Ausführungen und/oder Merkmale lediglich von einem Verbindungsabschnitt beschrieben wurden, gelten diese selbstverständlich auch für den anderen Verbindungsabschnitt, sofern ein zweiter Verbindungsabschnitt vorgesehen ist. Dasselbe gilt für den Aufnahmeabschnitt. Sofern ein zweiter Aufnahmeabschnitt eines benachbarten Rahmensegments vorgesehen ist, kann dieser dieselben Merkmale aufweisen wie der erste Aufnahmeabschnitt. Insbesondere können auch beide Aufnahmeabschnitte benachbarter Rahmensegmente identisch sein.

Unter Stabilitätsgesichtspunkten wird es als vorteilhaft angesehen, wenn die Rahmensegmente aus Metall ausgebildet sind. Beispielsweise handelt es sich um Stahl oder Aluminium. Während Stahl vergleichsweise kostengünstig ist, sind Rahmensegmente aus Aluminium vergleichsweise leicht.

Im Übrigen kann alternativ zu der mindestens einen Schraube auch ein Sicherungsstift zum Einsatz kommen. Dann weist das Verbindungsstück mindestens eine Durchgangsöffnung auf, die im zusammengesetzten Zustand des Rahmens mit zwei im ersten und/oder zweiten Rahmensegment ausgebildeten Öffnungen fluchtet. Durch die Öffnungen im Rahmensegment und die Durchgangsöffnung kann ein Sicherungsstift greifen. Sofern der Sicherungsstift einen Kopf aufweist, kann dieser im zusammengesetzten Zustand des Trampolins in der Vertiefung aufgenommen sein.

### Bezugszeichenliste

- 1: Trampolin
- 2: Rahmen
- 3: Bein
- 4: Sprungmatte
- 5: Seilring
- 6a: Rahmensegment
- 6b: Rahmensegment
- 6c: Rahmensegment
- 7: Verbindungsstelle
- 8: Verbindungsstück
- 9: erster Verbindungsabschnitt
- 10: zweiter Verbindungsabschnitt
- 11: erste Aussparung
- 12: zweite Aussparung
- 13: Boden
- 14: Gewinde
- 15: Seitenwand
- 16: Steg
- 17: Stoßfläche
- 18: Innenkontur
- 19: Vertiefung
- 20: Öffnung
- 21: Schraube
- 22: Schraubenkopf
- 23: Aufnahmeabschnitt

- D1: Durchmesser
- D2: Durchmesser
- d1: Durchmesser
- d2: Durchmesser

- A1: gerade Abschnitt
- A2: gerader Abschnitt

- S0: Teilkreisförmige Querschnittsfläche
- S1: Strichlinie
- S2: Strichlinie
- S3: Strichlinie

- S4: Querschnittsbereich
- S5: Querschnittsbereich

- E: freies Ende

## Patentansprüche

1. Trampolin (1), mit
- einem Rahmen (2), der eine Mehrzahl von rohrartigen Rahmensegmenten (6a; 6b; 6c) aufweist, und mit
- einer Mehrzahl von Verbindungsstücken (8),
- wobei jedes Verbindungsstück (8) dazu ausgebildet ist, ein erstes Rahmensegment (6b) und ein zweites Rahmensegment (6a) miteinander zu verbinden und hierzu mindestens in das erste Rahmensegment eingesteckt oder einsteckbar ist,
- wobei jedes Verbindungsstück (8) mindestens einen ersten Verbindungsabschnitt (9) mit einem teilkreisförmigen Querschnitt (S0) aufweist,
- wobei der teilkreisförmige Querschnitt eine erste Aussparung (11) bildet,
- wobei das erste Rahmensegment (6b) einen ersten Aufnahmeabschnitt (23) zur Aufnahme des ersten Verbindungsabschnitts (9) aufweist, dessen Innenkontur (18) sowohl an den teilkreisförmigen Querschnitt (S0) als auch an die erste Aussparung (11) angepasst ist, und
- wobei die Verbindungsstücke (8) aus Vollmaterial ausgebildet sind,
**dadurch gekennzeichnet,**
- **dass** die erste Aussparung (11) als Nut ausgebildet ist, und
- **dass** in die Nut ein nach innen ausgebildeter Vorsprung des ersten Aufnahmeabschnitts (23) greifen kann.

2. Trampolin (1) nach Anspruch 1, **dadurch gekennzeichnet, dass** sich die erste Aussparung (11) über die gesamte Länge des ersten Verbindungsabschnitts (9) erstreckt.

3. Trampolin (1) nach Anspruch 1 oder 2, **dadurch gekennzeichnet, dass** der erste Verbindungsabschnitt (9) ein erstes freies Ende (E) aufweist und dass sich die erste Aussparung (11) bis zu dem ersten freien Ende (E) erstreckt.

4. Trampolin (1) nach einem der Ansprüche 1 bis 3, **dadurch gekennzeichnet, dass** der Querschnitt der Rahmensegmente (6a; 6b; 6c) im Wesentlichen rund ist und dass der erste Aufnahmeabschnitt (23) durch eine Verformung eines Endes des ersten Rahmensegments (6b) gebildet ist.

5. Trampolin (1) nach einem der Ansprüche 1 bis 4, **dadurch gekennzeichnet, dass** die Verbindungsstücke (8) einen radialen Steg (16) aufweisen.

6. Trampolin (1) nach Anspruch 5, **dadurch gekennzeichnet, dass** der Steg (16) in Umfangsrichtung der Verbindungsstücke (8) zumindest teilweise umlaufend ausgebildet ist.

7. Trampolin (1) nach einem der Anspräche 5 oder 6, **dadurch gekennzeichnet, dass** der Steg (16) einen Außendurchmesser (D1) aufweist, der größer ist als der Durchmesser (d1) des teilkreisförmigen Querschnitts des Verbindungsabschnitts (9) und/oder mindestens dem Außendurchmesser (D2) eines angrenzenden Rahmensegments (6a; 6b; 6c) entspricht.

8. Trampolin (1) nach einem der Ansprüche 5 bis 7, **dadurch gekennzeichnet, dass** der Steg (16) mindestens eine seitliche Stoßfläche (17) aufweist, die die Einstecktiefe des jeweiligen Verbindungsstücks (8) in das erste Rahmensegment (6b) begrenzt.

9. Trampolin (1) nach einem der Ansprüche 1 bis 8, **dadurch gekennzeichnet, dass** das jeweilige Verbindungsstück (8) mindestens ein Gewinde (14) aufweist, das im zusammengesetzten Zustand des Rahmens (2) mit einer im ersten Rahmensegment (6b) ausgebildeten Öffnung (20) fluchtet.

10. Trampolin (1) nach Anspruch 9, **dadurch gekennzeichnet, dass** das Gewinde (14) in der ersten Aussparung (11) ausgebildet ist.

11. Trampolin (1) nach einem der Ansprüche 1 bis 10, **dadurch gekennzeichnet, dass** das erste Rahmensegment (6b) eine Vertiefung (19) bildet, die mit der ersten Aussparung (11) zusammenwirkt, wobei vorzugsweise vorgesehen ist, dass in der Vertiefung im zusammengesetzten Zustand des Trampolins mindestens ein Schraubenkopf (22) oder der Kopf eines Sicherungsstiftes aufgenommen ist.

12. Trampolin (1) nach einem der Ansprüche 1 bis 11, **dadurch gekennzeichnet, dass** der Aufnahmeabschnitt (9) gerade ausgebildet ist.

13. Trampolin (1) nach einem der Ansprüche 1 bis 12, **dadurch gekennzeichnet, dass** die Nut geneigte Seitenwände (15) aufweist.

14. Trampolin (1) nach einem der Ansprüche 1 bis 14, **dadurch gekennzeichnet, dass** die erste Aussparung (11) einen ebenen Boden (13) aufweist, der vorzugsweise mindestens 5 mm breit ist.

15. Trampolin (1) nach einem der Ansprüche 1 bis 14, **dadurch gekennzeichnet, dass** das jeweilige Verbindungsstück (8) einen zweiten Verbindungsabschnitt (10) mit einem teilkreisförmigen Querschnitt (S0) aufweist, wobei der teilkreisförmige Querschnitt eine zweite Aussparung (12) bildet und wobei das zweite Rahmensegment (6a) einen zweiten Aufnahmeabschnitt (23) zur Aufnahme des zweiten Verbindungsabschnitts (10) aufweist, dessen Innenkontur (18) sowohl an den teilkreisförmigen Querschnitt als auch an die Aussparung angepasst ist.

## Claims

1. Trampoline (1), with
- a frame (2) comprising a plurality of tubular frame segments (6a; 6b; 6c), and with
- a plurality of connectors (8),
- wherein each connector (8) is designed to connect a first frame segment (6b) and a second frame segment (6a) to each other and, for this purpose, is inserted or insertable at least into the first frame segment,
- wherein each connector (8) has at least a first connection section (9) with a partially circular cross section (S0),
- wherein the partially circular cross section forms a first recess (11),
- wherein the first frame segment (6b) has a first receiving section (23) for receiving the first connection section (9), the inner contour (18) of which is adapted to both the partially circular cross section (S0) and the first recess (11), and
- wherein the connectors (8) are made of solid material,
**characterized in that**:
- the first recess (11) is formed as a groove, and
- an inwardly formed projection of the first receiving section (23) can engage into the groove.

2. Trampoline (1) according to Claim 1, **characterized in that** the first recess (11) extends over the entire length of the first connection section (9).

3. Trampoline (1) according to Claim 1 or 2, **characterized in that** the first connection section (9) has a first free end (E), and **in that** the first recess (11) extends as far as the first free end (E).

4. Trampoline (1) according to any one of Claims 1 to 3, **characterized in that** the cross section of the frame segments (6a; 6b; 6c) is substantially round, and **in that** the first receiving section (23) is formed by a deformation of one end of the first frame segment (6b).

5. Trampoline (1) according to any one of Claims 1 to 4, **characterized in that** the connectors (8) have a radial web (16).

6. Trampoline (1) according to Claim 5, **characterized in that** the web (16) is designed extending at least partially in the circumferential direction of the connectors (8).

7. Trampoline (1) according to either of Claims 5 and 6, **characterized in that** the web (16) has an outer diameter (D1), which is greater than the diameter (d1) of the partially circular cross section of the connection section (9) and/or corresponds at least to the outer diameter (D2) of an adjacent frame segment (6a; 6b; 6c).

8. Trampoline (1) according to any one of Claims 5 to 7, **characterized in that** the web (16) has at least one lateral abutment surface (17), which limits the depth of insertion of the respective connector (8) into the first frame segment (6b).

9. Trampoline (1) according to any one of Claims 1 to 8, **characterized in that** the respective connector (8) has at least one thread (14), which, in the assembled state of the frame (2), is aligned with an opening (20) formed in the first frame segment (6b).

10. Trampoline (1) according to Claim 9, **characterized in that** the thread (14) is formed in the first recess (11).

11. Trampoline (1) according to any one of Claims 1 to 10, **characterized in that** the first frame segment (6b) forms a depression (19), which cooperates with the first recess (11), wherein it is preferably provided that, in the assembled state of the trampoline, at least one screw head (22) or the head of a locking pin is received in the depression.

12. Trampoline (1) according to any one of Claims 1 to 11, **characterized in that** the receiving section (9) is formed straight.

13. Trampoline (1) according to any one of Claims 1 to 12, **characterized in that** the groove has inclined side walls (15).

14. Trampoline (1) according to any one of Claims 1 to 14, **characterized in that** the first recess (11) has a planar base (13), which is preferably at least 5 mm wide.

15. Trampoline (1) according to any one of Claims 1 to 14, **characterized in that** the respective connector (8) has a second connection section (10) with a partially circular cross section (S0), wherein the partially circular cross section forms a second recess (12), and wherein the second frame segment (6a) has a second receiving section (23) for receiving the second connection section (10), the inner contour (18) of which is adapted to both the partially circular cross section and the recess.

## Revendications

1. Trampoline (1), comportant
- un cadre (2), qui comprend une pluralité de segments de cadre tubulaires (6a ; 6b ; 6c) et comportant
- une pluralité de pièces de liaison (8),
- chaque pièce de liaison (8) étant réalisée pour relier un premier segment de cadre (6b) et un deuxième segment de cadre (6a) l'un à l'autre et étant insérée ou pouvant être insérée à cet effet au moins dans le premier segment de cadre,
- chaque pièce de liaison (8) comprenant au moins une première section de liaison (9) comportant une section transversale en partie circulaire (S0),
- la section transversale en partie circulaire formant un premier évidement (11),
- le premier segment de cadre (6b) comprenant une première section de réception (23) destinée à recevoir la première section de liaison (9) dont le contour intérieur (18) est adapté à la fois à la section transversale en partie circulaire (S0) et au premier évidement (11), et
- les pièces de liaison (8) étant réalisées à partir d'un matériau massif,
**caractérisé en ce**
- **que** le premier évidement (11) est formé comme une rainure, et
- **qu'**une partie faisant saillie réalisée vers l'intérieur de la première section de réception (23) peut s'engager dans la rainure.

2. Trampoline (1) selon la revendication 1, **caractérisé en ce que** le premier évidement (11) s'étend sur toute la longueur de la première section de liaison (9).

3. Trampoline (1) selon la revendication 1 ou 2, **caractérisé en ce que** la première section de liaison (9) comprend une première extrémité libre (E) et que le premier évidement (11) s'étend jusqu'à la première extrémité libre (E).

4. Trampoline (1) selon l'une des revendications 1 à 3, **caractérisé en ce que** la section transversale des segments de cadre (6a ; 6b ; 6c) est sensiblement ronde et que la première section de réception (23) est formée par une déformation d'une extrémité du premier segment de cadre (6b).

5. Trampoline (1) selon l'une des revendications 1 à 4, **caractérisé en ce que** les pièces de liaison (8) comprennent une nervure radiale (16).

6. Trampoline (1) selon la revendication 5, **caractérisé en ce que** la nervure (16) est réalisée au moins en partie en périphérie dans la direction circonférentielle des pièces de liaison (8).

7. Trampoline (1) selon l'une des revendications 5 ou 6, **caractérisé en ce que** la nervure (16) comprend un diamètre extérieur (D1), qui est supérieur au diamètre (d1) de la section transversale en partie circulaire de la section de liaison (9) et/ou qui correspond au moins au diamètre extérieur (D2) d'un segment de cadre (6a ; 6b ; 6c) adjacent.

8. Trampoline (1) selon l'une des revendications 5 à 7, **caractérisé en ce que** la nervure (16) comprend au moins une surface d'appui latérale (17), qui limite la profondeur d'insertion de la pièce de liaison (8) respective dans le premier segment de cadre (6b).

9. Trampoline (1) selon l'une des revendications 1 à 8, **caractérisé en ce que** la pièce de liaison (8) respective comprend au moins un filetage (14), qui, à l'état assemblé du cadre (2), est aligné avec une ouverture (20) réalisée dans le premier segment de cadre (6b).

10. Trampoline (1) selon la revendication 9, **caractérisé en ce que** le filetage (14) est réalisé dans le premier évidement (11).

11. Trampoline (1) selon l'une des revendications 1 à 10, **caractérisé en ce que** le premier segment de cadre (6b) forme un renfoncement (19), qui coopère avec le premier évidement (11), le fait qu'au moins une tête de vis (22) ou la tête d'une goupille de blocage est reçue dans le renfoncement lorsque le trampoline est assemblé étant avantageusement prévu.

12. Trampoline (1) selon l'une des revendications 1 à 11, **caractérisé en ce que** la section de réception (9) est rectiligne.

13. Trampoline (1) selon l'une des revendications 1 à 12, **caractérisé en ce que** la rainure comprend des parois latérales inclinées (15).

14. Trampoline (1) selon l'une des revendications 1 à 14, **caractérisé en ce que** le premier évidement (11) comprend un fond plat (13), qui présente de préférence au moins une largeur de 5 mm.

15. Trampoline (1) selon l'une des revendications 1 à 14, **caractérisé en ce que** la pièce de liaison (8) respective comprend une deuxième section de liaison (10) comportant une section transversale en partie circulaire (S0), la section transversale en partie circulaire formant un deuxième évidement (12) et le deuxième segment de cadre (6a) comprenant une deuxième section de réception (23) destinée à recevoir la deuxième section de liaison (10), dont le contour intérieur (18) est adapté à la fois à la section transversale en partie circulaire et à l'évidement.
